(19) Europäisches Patentamt
European Patent Office
Office européen des brevets

(11) **EP 2 881 265 B1**

(12) **EUROPÄISCHE PATENTSCHRIFT**

(45) Veröffentlichungstag und Bekanntmachung des Hinweises auf die Patenterteilung:
**14.11.2018   Patentblatt 2018/46**

(21) Anmeldenummer: **14184875.4**

(22) Anmeldetag: **16.09.2014**

(51) Int Cl.:
*B60C 11/03* (2006.01)        *B60C 11/12* (2006.01)

(54) **Verfahren zur Ermittlung des Pitchlängenverhältnisses eines Pitches Pn, mit n grösser gleich 2, zum Pitch mit der kleinsten Umfangslänge in einem Laufstreifen eines Fahrzeugluftreifens**

Method for determining the pitch length ratio of a pitch Pn, where n is greater than or equal to 2, to the pitch with the smallest circumferential length in a tread of a pneumatic vehicle tire

Méthode pour déterminer le rapport de longueur d'un pas Pn, n est supérieur ou égal à 2, au pas ayant la plus petite longueur circonférentielle dans une bande de roulement d'un pneu

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2013   DE 102013225297**

(43) Veröffentlichungstag der Anmeldung:
**10.06.2015   Patentblatt 2015/24**

(73) Patentinhaber: **Continental Reifen Deutschland GmbH**
**30165 Hannover (DE)**

(72) Erfinder: **Diensthuber, Franz**
**30559 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
EP-A1- 0 788 899        EP-A2- 1 170 152
JP-A- H03 159 804

**Beschreibung**

Die Erfindung betrifft Verfahren zur Ermittlung des Pitchlängenverhältnisses eines Pitches $P_n$, $n \geq 2$, zum Pitch mit der kleinsten Umfangslänge in einem Laufstreifen eines Fahrzeugluftreifens, insbesondere PKW-Winterreifens, wobei der Laufstreifen zumindest eine schulterseitig verlaufende Blockreihe mit zumindest im Wesentlichen parallelogrammförmigen Profilblöcken aufweist, welche in Umfangsrichtung durch Querrillen voneinander getrennt sind, wobei je ein Profilblock mit je einer benachbarten Querrille einen Pitch bildet, wobei Pitches mit zumindest zwei unterschiedlichen Umfangslängen vorgesehen sind, deren Anordnung bzw. Aufeinanderfolge über den Reifenumfang gemäß einer geräuschoptimierten Pitchfolge erfolgt, und wobei in einem Profilblock, welcher zu einem Pitch der kleinsten Umfangslänge gehört, zumindest ein sich parallel zur Querrille erstreckender Einschnitt angeordnet ist, wobei die Anzahl der Einschnitte in den Profilblöcken in Pitches zunehmender Umfangslänge jeweils um 1 größer ist als die Anzahl der Einschnitte im Profilblock des jeweils kürzeren Pitches, wobei die Einschnitte die Profilblöcke in Blockelemente gliedern, und wobei sich die Profilblöcke aus Blockelementen zusammensetzen, die zumindest im Wesentlichen eine gleich große Umfangssteifigkeit und gleich große Umfangslängen aufweisen.

Bei der Gestaltung von Laufstreifen für Fahrzeugluftreifen ist es üblich, zur Optimierung bzw. Verminderung des Reifen-/Fahrbahngeräusches entweder im kompletten Laufstreifen -je nach Gestaltung - oder zumindest in über den Umfang umlaufenden Abschnitten des Laufstreifens, beispielsweise in Profilblockreihen, gleichartige Profilstrukturen, insbesondere Profilblöcke und Querrillen, in über den Umfang aufeinanderfolgenden Pitches mit unterschiedlichen Umfangslängen anzuordnen. Die Pitches werden üblicherweise in zwei bis fünf unterschiedlichen Umfangslängen vorgesehen, deren Längenverhältnisse zueinander festgelegt werden und deren günstigste Aufeinanderfolge über den Reifenumfang, die sogenannte Pitchfolge, mittels eines Rechenprogrammes ermittelt wird. Zum Thema Ausführung von Pitches und Pitchfolgen für Laufstreifen findet sich in der Patentliteratur eine Vielzahl von Lösungsvorschlägen, so beispielsweise in der EP 0 970 822 A2 und in der EP 1 431 077 B1.

Ein Reifen mit einem Laufstreifen gemäß dem Oberbegriff des Anspruches 1 ist aus der EP 788 899 A1 bekannt.

Bestimmte Pitchlängenverhältnisse haben sich als ein guter Kompromiss hinsichtlich des subjektiven Geräuschempfindens und der Profileigenschaften, wie beispielsweise des Abriebverhaltens, herausgestellt. Bei Laufstreifen mit Pitches mit zwei unterschiedlichen Umfangslängen beträgt dieses Verhältnis beispielsweise 1 : 1,35, bei Laufstreifen mit Pitches mit drei unterschiedlichen Umfangslängen beispielsweise 1 : 1, 2 : 1,4. Die üblichen Pitchlängenverhältnisse berücksichtigen nun bei Laufstreifen für Winterreifen nicht die durch die Einschnitte in den Profilblöcken gebildeten, oft geometrisch unterschiedlich gestalteten und steifigkeitsmäßig ebenfalls unterschiedlichen Blockelemente. Dies führt bei der Benützung des Reifens schließlich zu einem unterschiedlichen Abrieb der einzelnen Blockelemente, wobei steifere Blockelemente stärker abreiben und weiche Blockelemente, die sich beim Abrollen des Reifens leichter verformen, etwas geringer abreiben. Dieser ungleichförmige Abrieb reduziert insgesamt die Winterperformance des Reifens und kann auch das Geräusch negativ beeinflussen.

Der Erfindung liegt somit die Aufgabe zugrunde, hier Abhilfe zu schaffen und einen Reifen mit einem Laufstreifen der eingangs genannten Art derart auszuführen, dass der Abrieb vergleichmäßigt wird und gleichzeitig das Geräuschniveau verbessert bzw. optimiert wird.

Gelöst wird die gestellte Aufgabe erfindungsgemäß dadurch, dass das Pitchlängenverhältnis $L(P_{nrel})$ eines Pitches $P_n$, $n \geq 2$, zum Pitch $P_1$ mit der kleinsten Umfangslänge ermittelt wird aus

$$\mathrm{L}\left(P_{nrel}\right) = E_{1rel} \times \frac{\left(A_E\left(\mathrm{in}\ P_n\right) + 1\right) + A_E\left(\mathrm{in}\ P_n\right) \times D_{Erel}}{1 - k}$$

mit

$(A_E\ (\mathrm{in}\ P_n) + 1)$: Anzahl der Blockelemente im Pitch $P_n$,
$A_E\ (\mathrm{in}\ P_n)$: Anzahl der Einschnitte im Pitch $P_n$,
$D_{Erel}$ : relative Einschnittdicke von 0,1,
wobei $E_{1rel}$ die relative Blockelementlänge im Pitch $P_1$ mit der relativen Länge 1 gemäß

$$E_{1rel} = \frac{1 - k}{1{,}1\ A_E + 1}$$

ist, mit

$A_E$ Anzahl der Einschnitte im Pitch $P_1$,

und wobei k zwischen 0,18 und 0,27, insbesondere zwischen 0,20 und 0,25, beträgt.

Die sich gemäß der Erfindung ergebenden optimalen Pitchlängenverhältnisse sind somit unter anderem vor allem abhängig von der Anzahl der Einschnitte in den Pitches unterschiedlicher Umfangslängen. Es hat sich herausgestellt, dass erfindungsgemäß ausgelegte Laufstreifen einen besonders gleichmäßigen Abrieb zeigen und besonders geräuscharm ausgelegt werden können. Werte für k aus obigem Bereich ergeben Pitchlängenverhältnisse, die für eine besonders gleichmäßige Umfangssteifigkeit der betreffenden Profilblockreihe bzw. des Laufstreifenprofils sorgen. Dabei ist es vor allem vorteilhaft, wenn in sämtlichen Pitches der Faktor k gleich groß ist, das heißt, dass die Querrillenbreite in sämtlichen Pitches jeweils den gleichen Prozentsatz der jeweiligen Pitchlänge ausmacht.

Die Erfindung ist zwar nicht auf eine bestimmte Anzahl unterschiedlich langer Pitches eingeschränkt, es ist jedoch vorteilhaft, die Anzahl der Pitches unterschiedlicher Umfangslängen auf $\leq 5$, insbesondere auf $\leq 3$, zu begrenzen. Dadurch werden zu große Umfangslängen der Profilblöcke und zu große Breiten der Querrillen vermieden, die für eine gleichmäßige Umfangssteifigkeit ungünstig sein könnten.

Weitere Merkmale, Vorteile und Einzelheiten der Erfindung werden nun anhand der Zeichnung, die ein Ausführungsbeispiel darstellt, näher beschrieben. Dabei zeigen

Fig. 1 schematisch drei Profilblöcke eines Laufstreifens eines Fahrzeugluftreifens und

Fig. 2 eine Teilabwicklung einer Ausführungsform einer schulterseitigen Profilblockreihe eines Laufstreifens eines Fahrzeugluftreifens.

Es ist üblich, zur Erzielung eines unauffälligen und möglichst leisen Abrollgeräusches eines Fahrzeugluftreifens den Laufstreifen bzw. seine Profilierung geräuschoptimiert auszulegen. Dazu wird das Laufstreifenprofil in sogenannte Pitches - gleichartig ausgeführte, sich über den Reifenumfang wiederholende Profilstrukturen - gegliedert, die unterschiedliche Umfangslängen aufweisen. Bei Reifen, die einen Laufstreifen besitzen, der zumindest im Bereich einer Schulter eine Blockreihe aufweist, erfolgt üblicherweise die "Verpitchung" des Profils zumindest in dieser Schulterblockreihe bzw. ausgehend von dieser Schulterblockreihe. Die Erfindung befasst sich mit einer besonderen Ausgestaltung der Pitches zumindest in einer Schulterblockreihe, wobei die erfindungsgemäßen Maßnahmen, je nach Profilausgestaltung, auch in anderen Profilstrukturen, beispielsweise weiteren Profilblockreihen, des Laufstreifens realisiert sein können.

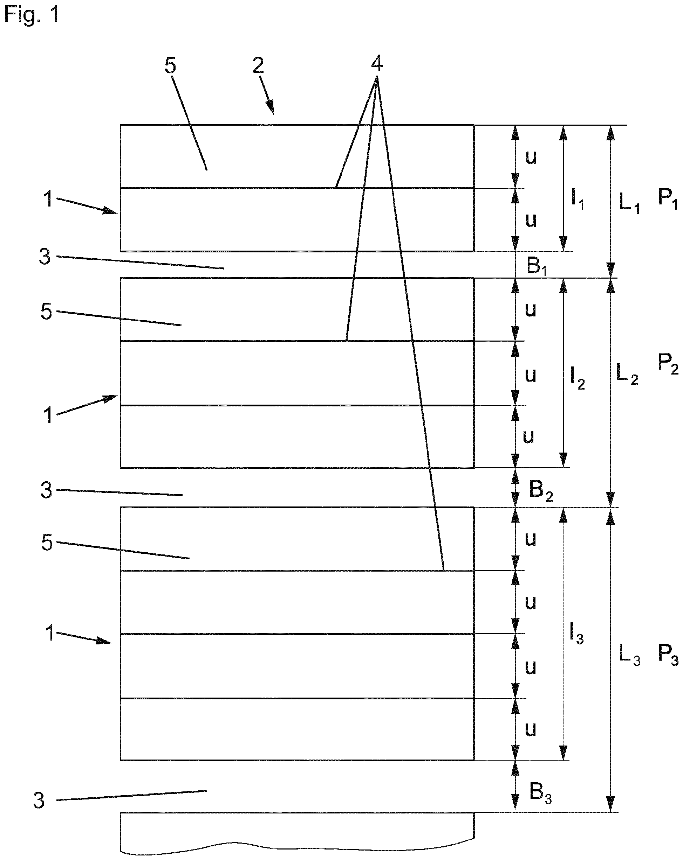

Fig. 1 zeigt drei Profilblöcke 1 einer Schulterblockreihe 2, wobei beispielhaft drei Pitches $P_1$, $P_2$ und $P_3$ mit unterschiedlichen Umfangslängen $L_1$, $L_2$, $L_3$ dargestellt sind. Jeder Pitch $P_1$, $P_2$, $P_3$ umfasst einen Profilblock 1 einer bestimmten Umfangslänge $l_1$, $l_2$, $l_3$, die mit der Umfangslänge $L_1$, $L_2$, $L_3$ des betreffenden Pitches $P_1$, $P_2$, $P_3$ korreliert, und eine dem jeweiligen Block 1 benachbart verlaufende Querrille 3. Auch die Breiten $B_1$, $B_2$ und $B_3$ der Querrillen 3 korrelieren mit den Umfangslängen $L_1$, $L_2$, $L_3$ und sind in jedem Pitch $P_1$, $P_2$ und $P_3$ unterschiedlich, wobei die größte Breite $B_3$ die Querrille 3 im längsten Pitch $P_3$ aufweist, hier befindet sich auch der Block 1 mit der größten Umfangslänge $l_3$. Der kürzeste Pitch $P_1$ setzt sich daher aus einem Block 1 mit der kleinsten Umfangslänge $l_1$ und einer Querrille 3 mit der geringsten Breite $B_1$ zusammen. Im Profilblock 1 im Pitch $P_1$ mit der geringsten Umfangslänge $L_1$ ist beispielhaft ein einziger Einschnitt 4 angeordnet, welcher parallel zu den Querrillen 3 und daher auch parallel zu den die Querrillen 3 begrenzenden Blockkanten verläuft und den Block 1 in zwei Blockelemente 5 gliedert, derart, dass jedes Blockelement 5 eine gleich große Umfangslänge u aufweist. Der Block 1 im Pitch $P_2$ mit der mittleren Umfangslänge $L_2$ weist zwei Einschnitte 4 auf, die den Block 1 in drei Blockelemente 5 gliedern, deren Umfangslänge ebenfalls u beträgt. Im längsten Pitch $P_3$ mit einem Block 1 der Umfangslänge $l_3$ verlaufen parallel zu den die Querrillen 3 begrenzenden Blockkanten drei Einschnitte 4, die den Block 1 in vier Blockelemente 5 der Umfangslänge u gliedern. Die Einschnitte 4 durchqueren die Profilblöcke 1 zumindest in jenem Bereich, der beim Abrollen des Reifens mit dem Untergrund in Kontakt kommt, und weisen eine Breite zwischen 0,4 mm und 0,6 mm auf.

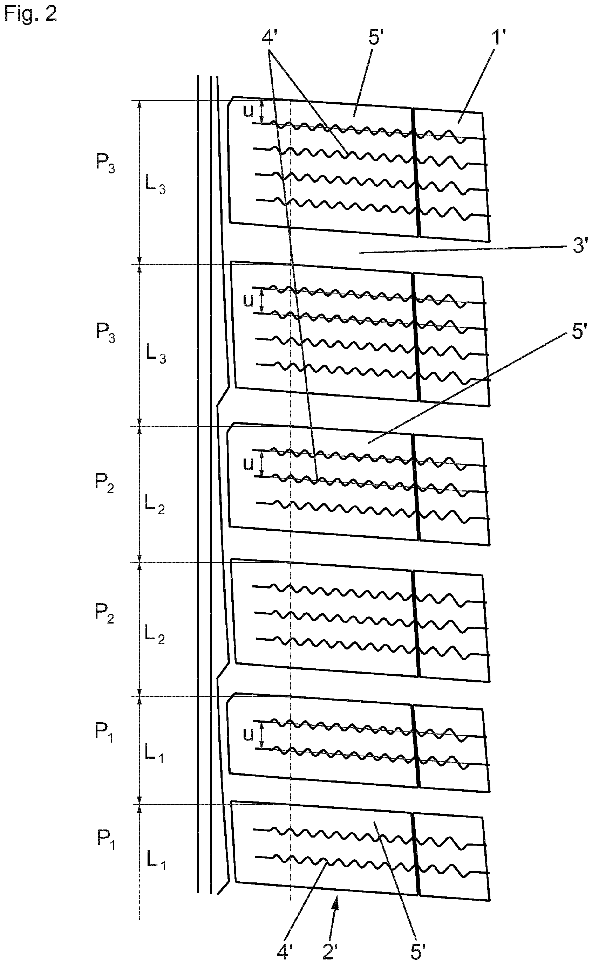

Fig. 2 zeigt eine Schulterblockreihe 2' mit Profilblöcken 1', die voneinander durch Querrillen 3', die gerade verlaufen und über ihren Verlauf eine insbesondere konstante Breite aufweisen, getrennt sind. Auch in dieser Blockreihe 2' sind Pitches $P_1$, $P_2$ und $P_3$ mit drei unterschiedlichen Umfangslängen $L_1$, $L_2$, $L_3$ vorgesehen, wobei hier beispielhaft jeweils zwei Pitches $P_1$, zwei Pitches $P_2$ und zwei Pitches $P_3$ in Umfangsrichtung aufeinander folgen. Die Blöcke 1' in den Pitches $P_1$ sind mit zwei Einschnitten 4' versehen, die hier in Draufsicht wellenförmig verlaufen. In den Blöcken 1' der Pitches $P_2$ sind drei Einschnitte 4', in den Blöcken 1' der Pitches $P_3$ vier Einschnitte 4' angeordnet. Die Einschnitte 4' erstrecken sich jeweils parallel zu den Querrillen 3' bzw. den diese begrenzenden Blockkanten der Profilblöcke 1' und gliedern den jeweiligen Profilblock 1' in Blockelemente 5' gleicher Umfangslänge u. Im Fall der hier wellenförmig bzw. zickzackförmig verlaufenden Einschnitte 4' wird die Umfangslänge u auf eine Linie bzw. Gerade bezogen, die zentral den jeweiligen Einschnitt durchläuft. Sämtliche Dimensionen, Pitchlängen $L_1$, $L_2$, $L_3$, Umfangslängen u und dergleichen sind, wie es Fig. 2 zeigt, am Laufstreifenrand gegeben, also dort, wo sich der seitliche Rand der Bodenaufstandsfläche des Reifens gemäß Standardbedingungen (E.T.R.T.O.) befindet.

Die Erfindung befasst sich mit einer Methode zur Ermittlung optimierter Pitchlängenverhältnisse in Pitches mit Blöcken, in welchen Einschnitte in der oben beschriebenen grundsätzlichen Anordnung enthalten sind. Zur grundsätzlichen Anordnung gehört, dass im kürzesten Pitch $P_1$ die Anzahl $A_E$ der Einschnitte mindestens 1 und in den längeren Pitches $P_2$, $P_3$ ... $P_n$, wobei n vorzugsweise $\leq$ 5, jeweils $A_E$ + 1, $A_E$ + 2 ... $A_E$ + n beträgt. Darüber hinaus ist in allen Pitches $P_1$, $P_2$,... $P_n$ die Steifigkeit der Blockelemente 5 zumindest im Wesentlichen gleich groß, indem die Dimension u in allen Blockelementen 5 gleich groß ist und die Einschnitte 4' bezüglich ihres Verlaufes, insbesondere ihres Tiefenverlaufes, entsprechend ausgelegt sind. Der Umfangslänge $L_1$ des kürzesten Pitches $P_1$ wird die relative Pitchlänge 1 zugeordnet. Die Anzahl der Blockelemente in den Pitches $P_1$, $P_2$, $P_3$ ... $P_n$ ergibt sich aus der Anzahl $A_E$, wobei im Pitch $P_1$ die Blockelementanzahl $A_E$ + 1, im Pitch $P_2$ $A_E$ + 2, ... im Pitch $P_n$ $A_E$ + n beträgt. Die Querrillenbreite $B_1$, $B_2$, ... $B_n$ wird in den nachfolgenden Berechnungen durch einen Faktor $k_n$ repräsentiert, welcher ein Prozentwert der jeweiligen Pitchlänge $L_1$, $L_2$, ... $L_n$ ist, welcher üblicherweise 18 % bis 27 %, insbesondere 20 % bis 25 %, beträgt.

Eine weitere Annahme wird bezüglich der sogenannten relativen Einschnittdicke $D_{Erel}$ getroffen, welche aus der mittleren Einschnittdicke von 0,5 mm dividiert durch die mittlere Blockelementlänge von 5 mm ermittelt wird und daher 0,1 gesetzt wird.

Zur Ermittlung des Pitchlängenverhältnisses zwischen dem Pitch $P_1$ und dem Pitch $P_n$ wird im nächsten Schritt die sogenannte relative Blocklementlänge $E_{1rel}$ für den Pitch $P_1$ mit der relativen Länge 1 aus nachstehender Gleichung 1 errechnet:

$$E_{1rel} = \frac{L\,(P_{1rel}) - B_{1rel}}{A_E + 1 + (A_E \times 0{,}1)} = \frac{1 - k_1}{1{,}1\,A_E + 1}$$

mit

L ($P_{1rel}$): relative Pitchlänge des Pitches $P_1$, L ($P_{1rel}$) = 1,
$B_{1rel}$: relative Querrillenbreite im Pitch $P_1$, $B_{1rel}$ = $k_1$ x 1,
$A_E$: Anzahl der Einschnitte im Pitch $P_1$,
$A_E$ + 1: Anzahl der Blockelemente im Pitch $P_1$.

Aus der nachstehenden Gleichung 2 wird schließlich die relative Pitchlänge L ($P_{nrel}$) für den Pitch $P_2$, $P_3$ ... $P_n$, als Verhältnis zur relativen Länge 1 des Pitches $P_1$ errechnet:

$$L\,(P_{nrel}) = E_{1rel} \times \frac{(A_E\,(\text{in } P_n) + 1) + A_E\,(\text{in } P_n) \times D_{Erel}}{1 - k_n}$$

mit

($A_E$ (in $P_n$) + 1): Anzahl der Blockelemente im Pitch $P_n$,
$A_E$ (in $P_n$): Anzahl der Einschnitte im Pitch $P_n$,
n $\geq$ 2.

Durch entsprechendes Einsetzen in Gleichung 2 lässt sich somit das Pitchlängenverhältnis des Pitches $P_2$, $P_3$ ... $P_n$ zum kürzesten Pitch $P_1$ errechnen.

## Bezugsziffernliste

| | |
|---|---|
| 1, 1' | Block |
| 2, 2' | Schulterblockreihe |
| 3, 3' | Querrille |
| 4, 4' | Einschnitt |
| 5, 5' | Blockelement |
| $A_E$ | Anzahl Einschnitte |
| $B_1$, $B_2$, $B_3$ | Breite Querrille |
| $D_{1rel}$ | relative Einschnittdicke Pitch 1 |
| $E_{1rel}$ | relative Blockelementlänge Pitch 1 |
| $l_1$, $l_2$, $l_3$ | Umfangslänge Block |

$L_1, L_2, L_3$      Umfangslänge Pitch
$P_1, P_2, P_3$      Pitch
u               Umfangslänge

**Patentansprüche**

1. Verfahren zur Ermittlung des Pitchlängenverhältnisses ($P_{nrel}$) eines Pitches $P_n$, $n \geq 2$, zum Pitch ($P_1$) mit der kleinsten Umfangslänge in einem Laufstreifen eines Fahrzeugluftreifens, insbesondere PKW-Winterreifens, wobei der Laufstreifen zumindest eine schulterseitig verlaufende Blockreihe (2') mit zumindest im Wesentlichen parallelogrammförmigen Profilblöcken (1') aufweist, welche in Umfangsrichtung durch Querrillen (3') voneinander getrennt sind, wobei je ein Profilblock (1') mit je einer benachbarten Querrille (3') einen Pitch ($P_1, P_2, P_3, ....P_n$) bildet, wobei Pitches ($P_1, P_2, P_3, ....P_n$) mit zumindest zwei unterschiedlichen Umfangslängen ($L_1, L_2, L_3, ....L_n$) vorgesehen sind, deren Anordnung bzw. Aufeinanderfolge über den Reifenumfang gemäß einer geräuschoptimierten Pitchfolge erfolgt, und wobei in einem Profilblock (1'), welcher zu einem Pitch ($P_1$) der kleinsten Umfangslänge ($L_1$) gehört, zumindest ein sich parallel zur Querrille (3') erstreckender Einschnitt (4') angeordnet ist, wobei die Anzahl der Einschnitte (4') in den Profilblöcken (1') in Pitches ($P_2, P_3, ....P_n$) zunehmender Umfangslänge ($L_2, L_3, ....L_n$) jeweils um 1 größer ist als die Anzahl der Einschnitte (4') im Profilblock (1') des jeweils kürzeren Pitches ($P_1$), wobei die Einschnitte (4') die Profilblöcke (1') in Blockelemente (5') gliedern, und wobei sich die Profilblöcke (1') aus Blockelementen (5') zusammensetzen, die zumindest im Wesentlichen eine gleich große Umfangssteifigkeit und gleich große Umfangslängen (u) aufweisen,
   **dadurch gekennzeichnet,**
   **dass** das Pitchlängenverhältnis L($P_{nrel}$) eines Pitches $P_n$, $n \geq 2$, zum Pitch $P_1$ mit der kleinsten Umfangslänge ermittelt wird aus

$$L\left(P_{nrel}\right) = E_{1rel} \times \frac{\left(A_E \left(\text{in } P_n\right) + 1\right) + A_E \left(\text{in } P_n\right) \times D_{Erel}}{1 - k}$$

   mit

   ($A_E$ (in $P_n$) + 1): Anzahl der Blockelemente im Pitch $P_n$,
   $A_E$ (in $P_n$): Anzahl der Einschnitte im Pitch $P_n$,
   $D_{Erel}$: relative Einschnittdicke von 0,1,
   wobei $E_{1rel}$ die relative Blockelementlänge im Pitch $P_1$ mit der relativen Länge 1 gemäß

$$E_{1rel} = \frac{1 - k}{1{,}1\, A_E + 1}$$

   ist, mit

   $A_E$ Anzahl der Einschnitte im Pitch $P_1$,
   und wobei k zwischen 0,18 und 0,27, insbesondere zwischen 0,20 und 0,25, beträgt.

2. Verfahren nach Anspruch 1, **dadurch gekennzeichnet, dass** in sämtlichen Pitches ($P_1, P_2, ... P_n$) k gleich groß ist.

3. Verfahren nach Anspruch 1 oder 2, **dadurch gekennzeichnet, dass** die Anzahl der Pitches ($P_1, P_2, ... P_n$) unterschiedlicher Umfangslängen ($L_1, L_2, ... L_n$) $\leq 5$ beträgt.

4. Verfahren nach einem der Ansprüche 1 bis 3, **dadurch gekennzeichnet, dass** die Anzahl der Pitches ($P_1, P_2, P_3$) unterschiedlicher Umfangslängen ($L_1, L_2, L_3$) $\leq 3$ beträgt.

**Claims**

1. Method for determining the pitch length ratio ($P_{nrel}$) of a pitch $P_n$, $n \geq 2$, to the pitch ($P_1$) with the smallest circumferential length in a tread of a pneumatic vehicle tyre, in particular a winter car tyre, wherein the tread has at least one row of blocks (2') running on the shoulder side and comprising at least substantially parallelogram-shaped profile blocks (1'), which are separated from one another in the circumferential direction by transverse grooves (3'), wherein each profile block (1') respectively forms a pitch ($P_1$, $P_2$, $P_3$, ...$P_n$) with an adjacent transverse groove (3'), wherein pitches ($P_1$, $P_2$, $P_3$, ...$P_n$) with at least two different circumferential lengths ($L_1$, $L_2$, $L_3$, ...$L_n$) are provided, the arrangement or sequence of which over the circumference of the tyre takes place according to a noise-optimized pitch sequence, and wherein, in a profile block (1') associated with a pitch ($P_1$) of the smallest circumferential length ($L_1$), at least one sipe (4') extending parallel to the transverse groove (3') is arranged, wherein the number of sipes (4') in the profile blocks (1') in pitches ($P_2$, $P_3$, ...$P_n$) of increasing circumferential length ($L_2$, $L_3$, ...$L_n$) is in each case greater by 1 that the number of sipes (4') in the profile block (1') of the respectively shorter pitch ($P_1$), wherein the sipes (4') divide the profile blocks (1') into block elements (5'), and wherein the profile blocks (1') are made up of block elements (5') that have at least substantially an equal circumferential rigidity and equal circumferential lengths (u),
**characterized**
**in that** the pitch length ratio L ($P_{nrel}$) of a pitch $P_n$, $n \geq 2$, to the pitch $P_1$ with the smallest circumferential length is determined from

$$L\,(P_{nrel}) = E_{1rel} \times \frac{(A_E\,(\text{in } P_n) + 1) + A_E\,(\text{in } P_n) \times D_{Erel}}{1 - k}$$

with

($A_E$ (in $P_n$) + 1) : the number of block elements in the pitch $P_n$,
$A_E$ (in $P_n$) : the number of sipes in the pitch $P_n$,
$D_{Erel}$ : the relative sipe thickness of 0.1,
where $E_{1rel}$ is the relative block element length in the pitch $P_1$ with the relative length 1 according to

$$E_{1rel} = \frac{1 - k}{1{,}1\,A_E + 1}$$

with

$A_E$ being the number of sipes in the pitch $P_1$,
and where k is between 0.18 and 0.27, in particular between 0.20 and 0.25.

2. Method according to Claim 1, **characterized in that** k is the same in all of the pitches ($P_1$, $P_2$, ...$P_n$) .

3. Method according to Claim 1 or 2, **characterized in that** the number of pitches ($P_1$, $P_2$, ...$P_n$) of different circumferential lengths ($L_1$, $L_2$, ...$L_n$) is $\leq 5$.

4. Method according to one of Claims 1 to 3, **characterized in that** the number of pitches ($P_1$, $P_2$, P3) of different circumferential lengths ($L_1$, $L_2$, $L_3$) is $\leq 3$.

**Revendications**

1. Procédé de détermination du rapport de longueur de pas ($P_{nrel}$) d'un pas $P_n$, avec $n \geq 2$, au pas ($P_1$) ayant la plus petite longueur périphérique dans une bande de roulement d'un pneumatique de véhicule, en particulier d'un pneu d'hiver de véhicule léger, la bande de roulement présentant au moins une rangée de blocs (2') s'étendant du côté de l'épaulement, avec des blocs profilés (1') au moins essentiellement en forme de parallélogramme, qui sont séparés les uns des autres dans la direction périphérique par des rainures transversales (3'), à chaque fois un bloc profilé (1') avec à chaque fois une rainure transversale adjacente (3') formant un pas ($P_1$, $P_2$, $P_3$,... $P_n$), les pas ($P_1$, $P_2$, $P_3$,... $P_n$) étant prévus avec au moins deux longueurs périphériques différentes ($L_1$, $L_2$, $L_3$,... $L_n$) dont l'agencement ou la succession sur la périphérie du pneu sont effectués avec optimisation des pas successifs en termes de bruit, et au moins une entaille (4') s'étendant parallèlement à la rainure transversale (3') étant disposée dans un bloc profilé (1') qui appartient à un pas ($P_1$) ayant la plus petite longueur périphérique ($L_1$), le nombre des entailles (4') dans les blocs profilés (1') dans les pas ($P_2$, $P_3$,... $P_n$) de longueur périphérique croissante ($L_2$, $L_3$,... $L_n$) étant à chaque fois supérieur de 1 au nombre des entailles (4') dans le bloc profilé (1') du pas respectivement plus court ($P_1$), les entailles (4') divisant les blocs profilés (1') en éléments de bloc (5'), et les blocs profilés (1') se composant d'éléments de blocs (5') qui présentent au moins essentiellement une rigidité périphérique identique et des longueurs périphériques (u) identiques,
**caractérisé en ce que**
le rapport de longueur de pas L($P_{nrel}$) d'un pas $P_n$, avec n ≥ 2, au pas $P_1$ ayant la plus petite longueur périphérique étant déterminé à partir de la formule

$$L(P_{nrel}) = E_{1rel} \times \frac{(A_E(in\ P_n) + 1) + A_E\ (in\ P_n) \times D_{Erel}}{1 - k}$$

où

($A_E$ (in $P_n$) + 1) : nombre des éléments de bloc dans le pas $P_n$,
$A_E$ (in $P_n$) : nombre des entailles dans le pas $P_n$,
$D_{Erel}$ : épaisseur d'entaille relative de 0,1,
$E_{1rel}$ étant la longueur d'élément de bloc relative dans le pas $P_1$ avec la longueur relative 1 selon la formule

$$E_{1rel} = \frac{1 - k}{1{,}1\ A_E + 1}$$

où

$A_E$ est le nombre des entailles dans le pas $P_1$,
et où k est compris entre 0,18 et 0,27, en particulier entre 0,20 et 0,25.

2. Procédé selon la revendication 1, **caractérisé en ce que** dans tous les pas ($P_1$, $P_2$, ... $P_n$), k est identique.

3. Procédé selon la revendication 1 ou 2, **caractérisé en ce que** le nombre des pas ($P_1$, $P_2$, ... $P_n$) de longueurs périphériques différentes ($L_1$, $L_2$, ... $L_n$) est ≤ 5.

4. Procédé selon l'une quelconque des revendications 1 à 3, **caractérisé en ce que** le nombre des pas ($P_1$, $P_2$, $P_3$) de longueurs périphériques différentes ($L_1$, $L_2$,$L_3$) est ≤ 3.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0970822 A2
- EP 1431077 B1
- EP 788899 A1